# EUROPEAN PATENT SPECIFICATION

(11) **EP 3 984 019 B1**
(45) Date of publication and mention of the grant of the patent: **21.08.2024**
(21) Application number: 20730669.7
(22) Date of filing: 11.06.2020
(51) Int. Cl.: G10K 9/12, G10K 11/22, H04R 1/30, B60Q 5/00

(54) **HIGH-PERFORMANCE SOUND GENERATING SYSTEM FOR VEHICLES**
HOCHLEISTUNGSSCHALLERZEUGUNGSSYSTEM FÜR FAHRZEUGE
SYSTÈME DE GÉNÉRATION DE SON À HAUTE PERFORMANCE POUR VÉHICULES

(30) Priority: 13.06.2019 IT 201900008937
(43) Date of publication of application: 20.04.2022
(73) Proprietor: Ask Industries Societa' per Azioni, 60037 Monte San Vito (AN) (IT); R.C.F. S.p.A., 42124 Reggio Emilia (IT)
(72) Inventor: PRATI, Stefano, 42048 Rubiera (RE) (IT); MANINI, Alessandro, 42121 Reggio Emilia (IT); UGOLOTTI, Emanuele, 42020 San Polo d'Enza (RE) (IT); CINANNI, Dario, 60019 Senigallia (AN) (IT); ARLETTI, Maurizio, 42122 Reggio Emilia (IT); NILI, Tiziano, 42124 Reggio Emilia (IT)
(74) Representative: Baldi, Claudio
(86) International application number: PCT/EP2020/066168
(87) International publication number: WO 2020/249660

(56) References cited:
- DE-A1- 102017 203 184
- DE-A1- 102017 210 688
- US-A1- 2010 245 069
- US-A1- 2014 328 494

## Description

The present invention relates to a sound generating system for vehicles that is used for generating a sound with maximum efficiency and minimum volume, as well as for achieving high sound values and in particular for reproducing a typical sound generated by the exhaust gases of an internal combustion engine that are emitted from an exhaust pipe of the vehicle.

Some automotive manufacturers need to achieve high sound levels outside the vehicle to simulate or improve the sound level produced by the exhaust of the combustion fumes of the internal combustion engine of the vehicle. For example, in the most extreme example, some automotive manufacturers need to achieve sound levels of 130 - 135 dB at 30 cm from the mouth of the exhaust of the vehicle, with the microphone orientated at 45° (in this case, dBre20µPa).

With the introduction of anti-contamination systems (particulate filters, filters for treatment of unburnt hydrocarbons), the sound produced by the exhaust may be dramatically reduced in such a way to eliminate the sound-vehicle association that characterizes the vehicle category and consequently the value of the vehicle in terms of performance and value. On the other hand, the sound-vehicle association is changing dramatically because of the progressive introduction of electric vehicles, wherein the sound produced by the exhaust and the sound produced by the engine no longer exist. However, automotive manufacturers would like to maintain said sound-vehicle association as long as possible.

The only solution to remedy such a technical problem is to use an audio reproduction, namely to reproduce a sound that increases, in case of vehicles with internal combustion engine, or synthesizes, in case of electric vehicles, the typical sound produced by the emission of the exhaust gases of an internal combustion engine.

In this case, the audio reproduction is performed with a system of electro-acoustic transducers (loudspeakers) controlled by a suitably processed and amplified signal. In general, the system should be able to generate an external sound with maximum efficiency and maximum frequency extension. However, the loudspeakers with direct radiation that are traditionally used in vehicles for reproducing the audio signal in the vehicle compartment cannot achieve a high directive sound level that is similar and capable of replacing the sound level generated by the emission of exhaust gases from the vehicle silencer. Therefore, lower sound levels, higher volumes, poor directivity and high power consumption must be accepted.

US2014/328494 discloses a sound generating system that comprises a sound generator disposed in the vehicle and a sound emission tube that partially comes out of the vehicle. The document does not disclose that a single electro-acoustic transducer is connected to two acoustic wave-guides.

US2010/245069 discloses the generation of a sound that simulates the noise of an engine and the propagation of said sound through a wave-guide partially outside the vehicle.

DE102017203184 discloses the generation of an artificial exhaust noise to imitate the exhaust system of a vehicle.

DE 102017210688 discloses the generation of an artificial noise of a vehicle engine according to parameters detected by an ECU.

US2018/053635 discloses a phase-plug.

US6038326 discloses different types of horns for electromechanical transducers.

US2015/373445 discloses a horn with dome-shaped membrane, phase-plug and wave-guide.

US2018/020290 discloses an audio system for vehicles of infinite baffle type.

The purpose of the present invention is to eliminate the drawbacks of the prior art by disclosing a sound generating system for vehicles that is capable of simulating the typical sound generated by the emission of exhaust gases from the silencer of an internal combustion engine, in an efficacious, effective and accurate way.

Another purpose of the present invention is to provide such a sound generating system for vehicles characterized by higher efficiency and consequently lower power consumption, as well as a defined emission in the space (controlled directivity), compared to the sound generating systems of the prior art.

These purposes are achieved according to the invention with the characteristics of the independent claim 1.

Advantageous embodiments of the invention appear from the dependent claims.

The applicant performed several experimental tests, in the attempt to reproduce the sound generated by the emission of exhaust gases from the silencer of an internal combustion engine, using different types of loudspeakers with direct radiation in different positions of the vehicle. However, said experimental tests were not satisfactory in terms of sound level and spatial distribution compared to the real sound generated by the emission of the exhaust gases from the silencer of an internal combustion motor.

For this reason, the applicant decided to use a technique to improve and control the spatial emission of the electro-acoustic transducers that are normally used, namely transducers with direct radiation and also suitable transducers that use a horn loading technique. In fact, the horn loading technique controls the directivity and the efficiency of the emission through an especially designed wave-guide or horn. In particular, the applicant demonstrated the advantageous use of compression drivers associated with a wave-guide conduit or horn (Horn Compression Driver). As a matter of fact, with such a type of compression driver associated with a wave-guide conduit, a sound pressure level (SPL) of 130 dB was achieved and exceeded, using an electrical power lower than 200W.

As it is known, the sound emission of a loudspeaker with direct radiation, in first approximation, is defined by the following relation, considering an emission with spherical waves:
Wherein:
- BI - also defined as forcing factor, the product of the magnetic induction by the length of the wire of the immersed coil - [T.m = V sec m⁻¹]
- Meq - Mobile equivalent mass, mechanical parts plus equivalent air load [kg]
- Re - Coil electric resistance ([Ohm])
- SD - Vibrating surface [m²]
- ρ₀ - Air density - [Kg m⁻³]
- V(ω) - Electrical voltage applied to the coil [Volt]
- H(ω) - Transfer function
- G(θ,ω) - Directivity function
- r - radius of the spherical wave front or distance between receiver and emitter.

Apart from the physical parameters, by maximizing the parameters in the numerator and minimizing the parameters in the denominator, the sound level can be increased and the transfer function band can be extended; moreover, the directivity of the source can be improved by disposing a horn load or wave-guide in front of the membrane of the transducer. As it is known, by suitably designing the wave-guide, very high sound pressure levels can be achieved in a limited space, thus modifying the directivity.

The design of the wave-guide comprises the application of a given compression level of the air in front of the emission membrane of the transducer. The compressed air is conveyed in the wave-guide through a device, known in the prior art as phase-plug, which minimizes the generation of turbulence and, most of all, makes the path of the acoustic waves produced by each portion of the surface of the membrane practically equivalent, adding them and creating a flat wave front in the conduit of the wave-guide. US2037187 discloses such a type of phase-plug composed of a plurality of conical elements disposed coaxially one inside the other. The effect of said device increases when the frequency of the signal to be transduced increases, also depending on the dimensions of the membrane of the transducer.

Additional features of the invention will be clearer from the following detailed description, which refers to merely illustrative, not limiting embodiments, as shown in the appended figures, wherein:
Fig. 1 is a block diagram that diagrammatically shows the sound generating system for vehicles which is not part of the invention;
Fig. 2 is a block diagram that diagrammatically shows a second embodiment of the sound generating system for vehicles according to the invention;
Fig. 3 is an axial view of an electro-acoustic transducer of the sound generating system according to the invention, in the form of a compression driver;
Fig. 4 is an axial view of a second embodiment of a compression driver of the sound generating system according to the invention;
Figs. 4A and 4B are the same views as Fig. 4, which show variants of the compression driver of Fig. 4;
Fig. 5 is a chart that shows the frequency response of a compression driver with a wave-guide;
Figs. 6 and 7 are charts that show the frequency response of two loudspeakers without wave-guide and with wave-guide, respectively;
Fig. 8 is a perspective view of a phase-plug of the sound generating system according to the invention;
Fig. 9 is a perspective axial view of a second embodiment of a wave-guide;
Figs. 10 and 11 are two perspective views of a third and a fourth embodiment of a wave-guide;
Figs. 12 and 13 are side views of a vehicle that show two embodiments of the sound generating system which is not part of the invention;
Fig. 14 is a plan view of a vehicle that shows another embodiment of the sound generating system which is not part of the invention;
Fig. 15 is a plan view of the vehicle that shows a signal processing of the sound generating system;
Fig. 16 is an axial view that shows an embodiment of a compression driver assembly with two wave-guides of the sound generating system according to the invention;
Figs. 16A and 16B are the same views as Fig.16, which show variants of the compression driver of Fig. 16;
Figs. 17 and 18 are two side views of a vehicle wherein the assembly of Fig. 16 is mounted.

With reference to the Figures, a sound generating system for vehicles is disclosed.

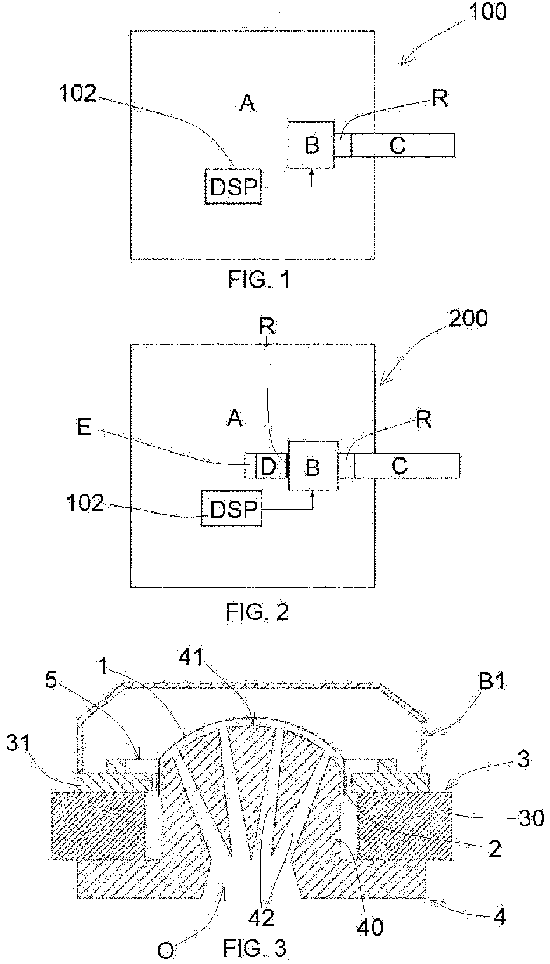

With reference to Fig. 1, the application in a vehicle is considered. The square area A represents a vehicle, and the perimeter divides the interior from the exterior of the vehicle.

A sound generating system (100), which is not part of the invention, comprises:
- an electro-acoustic transducer (B) suitable for generating a sound in response to an electrical input signal,
- a digital signal processor (DSP) (102) electrically connected to the electro-acoustic transducer (B) to control the electro-acoustic transducer (B) in such a way to emit a similar sound to the sound generated by the exhaust emissions of an internal combustion engine; and
- an acoustic wave-guide (C) coupled with the electro-acoustic transducer (B) to amplify the sound emitted by the electro-acoustic transducer.

The electro-acoustic transducer (B) is disposed in the vehicle (A). A portion of the acoustic wave-guide (C) lies inside the vehicle (A), and another portion of the acoustic wave-guide (C) lies outside the vehicle, where the sound is emitted.

A phase-plug (R) is disposed between the electro-acoustic transducer (B) and the acoustic wave-guide (C). The complexity (geometric configuration and number of radial or concentric conduits) of the phase-plug (R) depends on the maximum frequency to be reproduced.

In the following description, elements that are identical or correspond to the ones described above are indicated with the same numerals, omitting their detailed description.

With reference to Fig. 2, a second embodiment of a sound generating system according to the invention is disclosed, which is indicated with reference numeral 200. The sound generating system (200) provides for adding a second acoustic wave-guide (D) in the vehicle (A), said second acoustic wave-guide (D) being connected in one side of the electro-acoustic transducer (B) in opposite position to the side where the first wave-guide (C) that goes outwards is connected.

The second wave-guide (D) emits the sound inside the vehicle. In this way, because of the provision of the second wave-guide (D), the sound can be emitted in the internal compartment of the vehicle. An acoustic damper (E) is disposed in the second wave-guide (D). A phase-plug (R) is disposed between the electro-acoustic transducer (B) and the second wave-guide (D).

Fig. 3 shows an embodiment of the electro-acoustic transducer (B) that consists in a compression driver (B1).

The compression driver (B1) comprises a membrane (1) connected to a voice coil (2) arranged in an air gap with a magnetic field generated by a magnetic unit (3). The magnetic unit (3) comprises a magnet (30) disposed between a yoke (4) and an upper pole plate (31). The yoke (4) has a shank (40) disposed inside the voice coil (2).

A spider (5) is connected to the magnetic unit (3) and to the voice coil (2) in order to center the voice coil (2) in the air gap.

The membrane (1) has a dome-like shape or a tapered shape in such a way to define a concave surface directed towards an output duct (O) obtained in the yoke (4) of the magnetic unit. In such a case, the shank (40) of the yoke has a convex surface (41) directed towards the concave surface of the membrane (1). The convex surface (41) of the shank is provided with a plurality of openings that act as phase-plug and are in communication with passages (42) that end in the output duct (O) for the emission of sound.

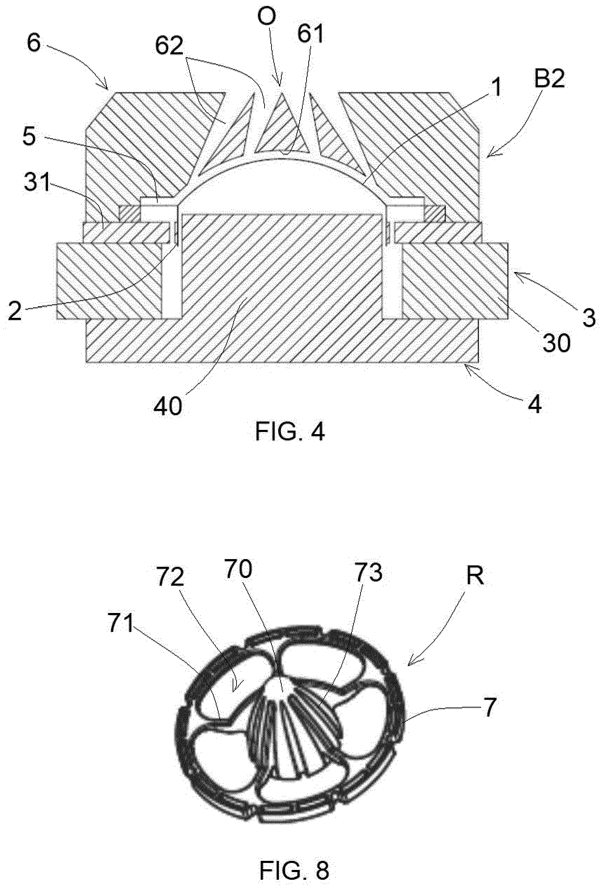

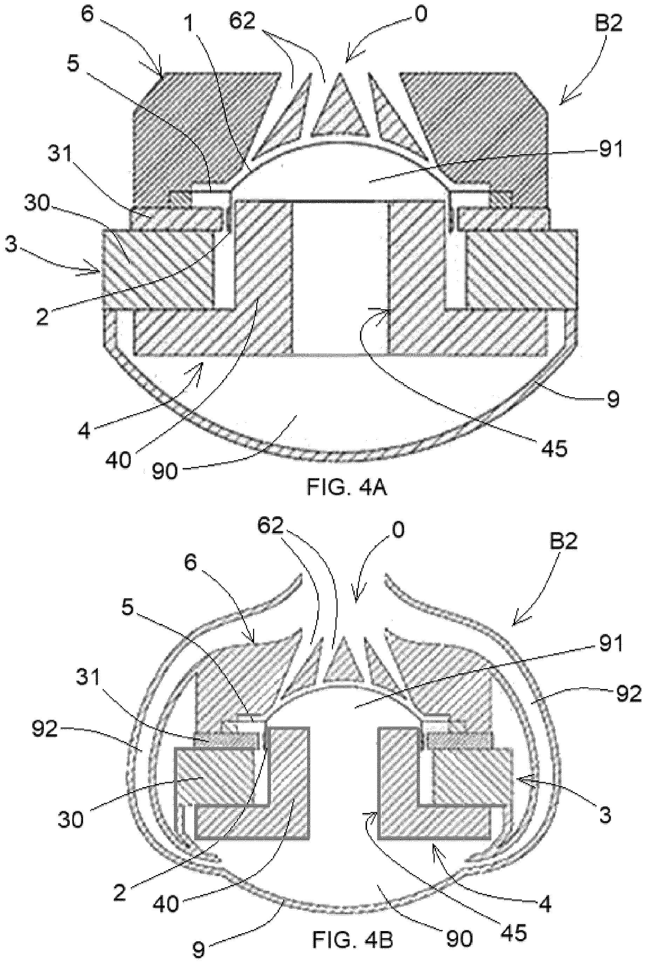

Fig. 4 shows a second embodiment of the electro-acoustic transducer (B) that consists in a compression driver (B2), wherein the output duct (O) is directed towards the convex surface of the membrane (1). In this case, the output duct (O) is obtained in a support (6) disposed on the upper pole plate (31) of the magnetic unit. The support (6) has a concave surface (61) directed towards the convex surface of the membrane (1). The concave surface (61) of the support is provided with a plurality of openings that are in communication with passages (62) that end in the output duct (O) for the emission of sound.

Because of the provision of the output duct (O) of the compression driver (B2) on the convex side of the membrane (1), the voice coil (2) is insulated from the external environment, thus reducing the risks of damage caused by the introduction of water eater or dust. The configuration of Fig. 4 is more advantageous for automotive applications, where weather agents may damage the electro-acoustic transducer (B).

Fig. 4A shows a variant of the compression driver (B2) of Fig. 4, which improves the behavior at low frequencies. A dome-shaped enclosure (9) is mounted under the magnetic unit (3) in such a way to form a rear chamber (90). The yoke (4) has a through axial duct (45) that puts the rear chamber (90) in communication with a front chamber (91) formed above the shank (40) of the yoke, between the shank (40) of the yoke and the dome-shaped membrane (1). The rear chamber (90) acts as resonator and improves the performance at low frequencies.

Fig. 4B shows an additional variant of the compression driver (B2) of Fig. 4A, which uses the rear chamber (90) in communication with the output duct (O) of the compression driver (B2) by means of peripheral conduits (92). The peripheral conduits (92) pass externally with respect to the magnetic unit (3) and the support (6). Such a solution additionally improves the behavior at low frequencies.

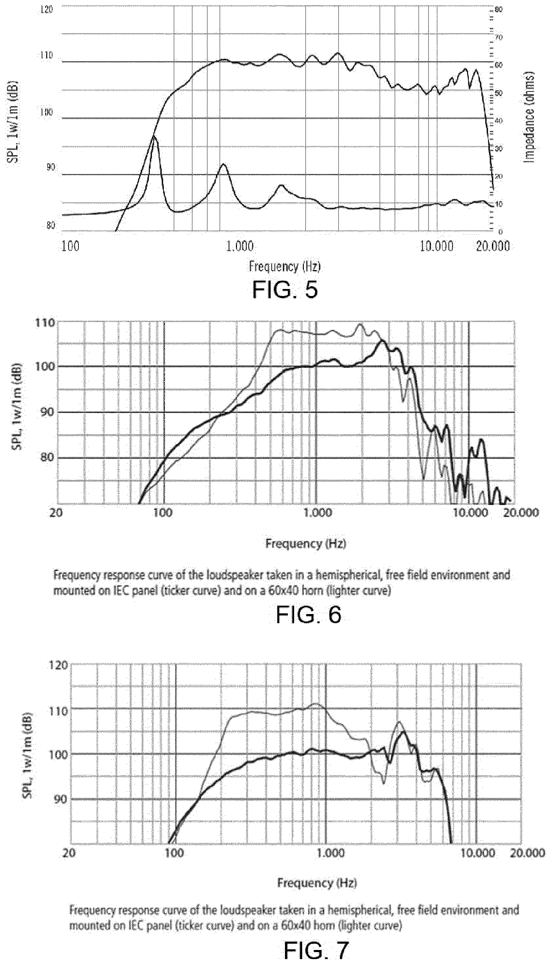

Fig. 5 is a chart that shows the frequency response of a compression driver available on the market, with the application of a wave-guide. In particular, Fig. 5 shows the values of the sound pressure level (SPL) detected in an anechoic chamber and the impedance values upon a frequency variation, with such a constant voltage that 1 Wrms is obtained on electric resistance equivalent to the rated impedance. As shown in the chart, the SPL is approximately 110 dB in a frequency range from 500 to 3,000 Hz.

Instead of being a compression driver, the electro-acoustic transducer (B) can be an ordinary loudspeaker with direct radiation. In such an instance, the loudspeaker has lower operating frequencies than the compression driver and the wave-guide (C) applied to the loudspeaker has higher dimensions (for example, a rectangular outlet with 60cm x 40cm size) compared to the use of a compression driver.

For illustrative purposes, loudspeakers that are defined as "Midrange" can be used, with a diameter of the membrane of 10 inches (approximately 250 mm).

With reference to Fig. 6, if a 60cm x 40cm wave-guide is applied to an 8" Midrange, the frequency response increases by approximately +8 dB, in a frequency range of 500-5.000 Hz.

With reference to Fig. 7, if a specific phase-plug (shown in Fig. 8), and a 60cm x 40cm wave-guide are applied to a Midrange of 10" diameter, the frequency response increases by approximately +10 dB, in a frequency range of 500-5,000 Hz.

Fig. 8 shows an example of phase-plug (R). The phase-plug (R) is suitable for being applied on the output duct of a compression driver or in front of the membrane of a loudspeaker in order to increase the uniformity and the linearity of the coupling to a horn or wave-guide.

Fig. 8 shows an example of phase-plug (R) for loudspeaker with direct radiation that comprises a collar (7) connected to a central portion (73) by means of a plurality of radial spokes (71) in such a way to define a plurality of slots (72). Fig. 8 shows five slots (72). The central portion (70) of the phase-plug is usually provided with a truncated-conical shape in order to be inserted in the groove of a horn or wave-guide with a plurality of longitudinal grooves (73).

One of the first examples of a phase-plug for compression drivers is disclosed in US2037187, which illustrates a plurality of conical elements that are disposed coaxially one inside the other.

The main parameters of a wave-guide are: its length, the surface of the mouth for emission towards the exterior, and the variation of the transverse surface between the inlet groove and the outlet. These parameters define the pass band and the efficiency of acoustic energy transmission. The geometrical development of the wave-guide can be deformed, namely the wave-guide can be bent and can have a path that is not exactly straight, while still operating in a correct, acceptable way.

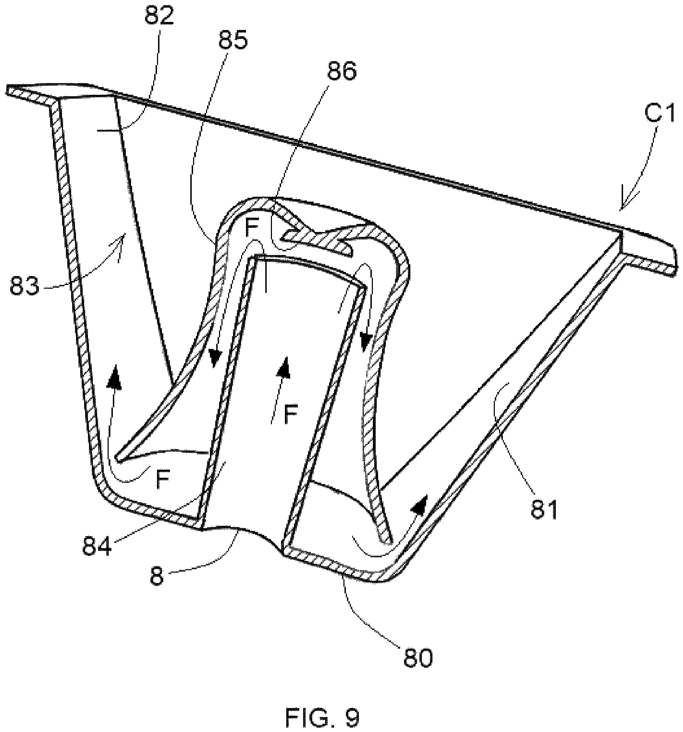

Fig. 9 shows a first embodiment of a wave-guide (C1). The wave-guide (C1) has a circular inlet groove (8) in communication with a cylindrical conduit (84) that is coaxially disposed inside a second conduit (85) with an upper wall (86) with a flow deflector that radially divides the air flow (F) that reaches the upper wall (86). The two conduits (84, 85) are disposed inside the body (81) of the wave-guide that defines a channel (83) with truncated-pyramidal shape and square or rectangular section, which ends in the outlet (82) with square or rectangular shape.

The second conduit (84) is open on the bottom in such a way that the air flow (F) can flow in the conduit (83) of the body of the wave-guide and leave from the outlet (82) with square or rectangular shape. So, the air flow (F) follows an S-shaped tortuous path from the inlet groove (8) towards the outlet (82). In view of the above, the introduction of external elements in the inlet groove (8) is prevented.

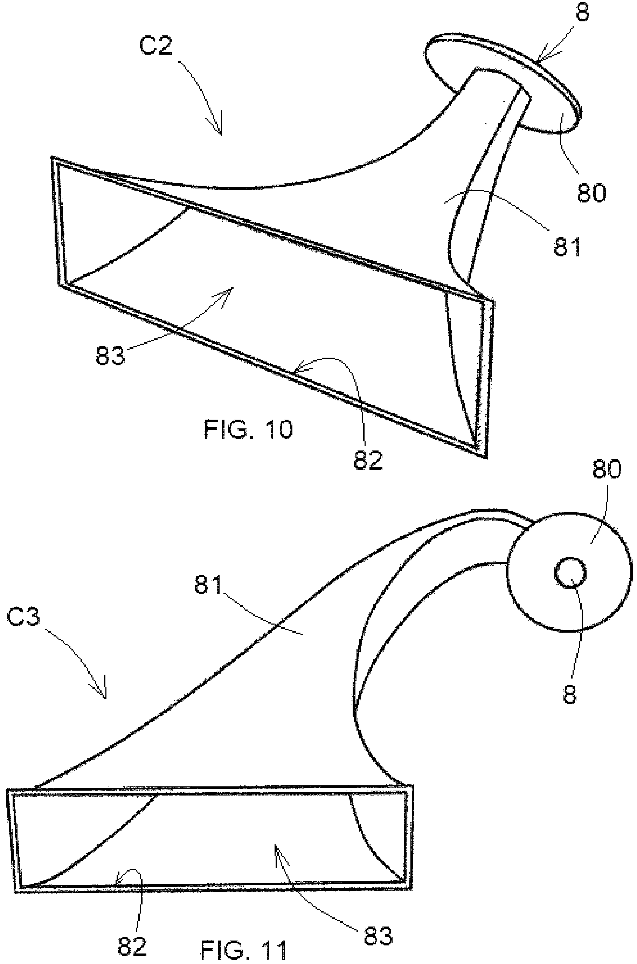

Fig. 10 illustrates a second embodiment of a wave-guide (C2), wherein the body (81) that defines the channel (83) from the inlet groove (8) to the outlet (82) has a tapered, curved shape.

Fig. 11 illustrates a third embodiment of a wave-guide (C3), wherein the body (81) that defines the channel (83) from the inlet groove (8) to the outlet (82) has a tapered shape with a 180° curve. Moreover, the axis of the inlet groove (8) and the axis of the outlet (82) are staggered. In view of the above, when the wave-guide (C3) is mounted, the body (81) of the wave-guide has an inclination from the bottom upwards, going from the outlet (82) to the inlet groove (8). In such an instance, the positioning at 180° between the inlet groove (8) and the outlet (82) can break a water jet during a washing cycle with a pressure washer (the high pressure of the pressure washer might damage the transducer), whereas the inclination between the inlet groove (8) and the outlet (82) prevents the accumulation and stagnation of water.

The provision of a transducer with a wave-guide is an additional advantage in terms of installation in a vehicle because the wave-guide protects the transducer against the weather agents. Moreover, the wave-guide can be modeled in such a way to be integrated with the aerodynamics of the vehicle, emitting the sound from parts of the vehicle that are not visible (for example, behind grilles in the back or in the front bumper of the vehicle).

For instance, the wave-guide can be extremely flat and mounted immediately under the underbody of the vehicle, following its curvature, without hindering the air flow that flows under the underbody of the vehicle while traveling, without changing the aerodynamics of the vehicle.

Another solution is to emit the sound also from the rear portion of the electro-acoustic transducer and convey the second emission towards the interior of the vehicle with a wave-guide.

Another solution that is suitable for increasing the sound pressure of the wave-guide at low frequencies consists in positioning the outlet in the underbody of the vehicle in such a way to create an acoustic load provided by the air gap between the underbody of the vehicle and the tread. Moreover, the closeness to the tread would result in the emission of a semi-spherical acoustic field.

The system of the invention maximizes the transduction efficiency with minimum power consumption. If significant sound pressure levels (SPL higher than 120dB) are not necessary, the power is reduced, and the system of the invention can be applied to electric vehicles to create a sound for safety and marketing reasons, in order to give a specific sound identity to each type of vehicle.

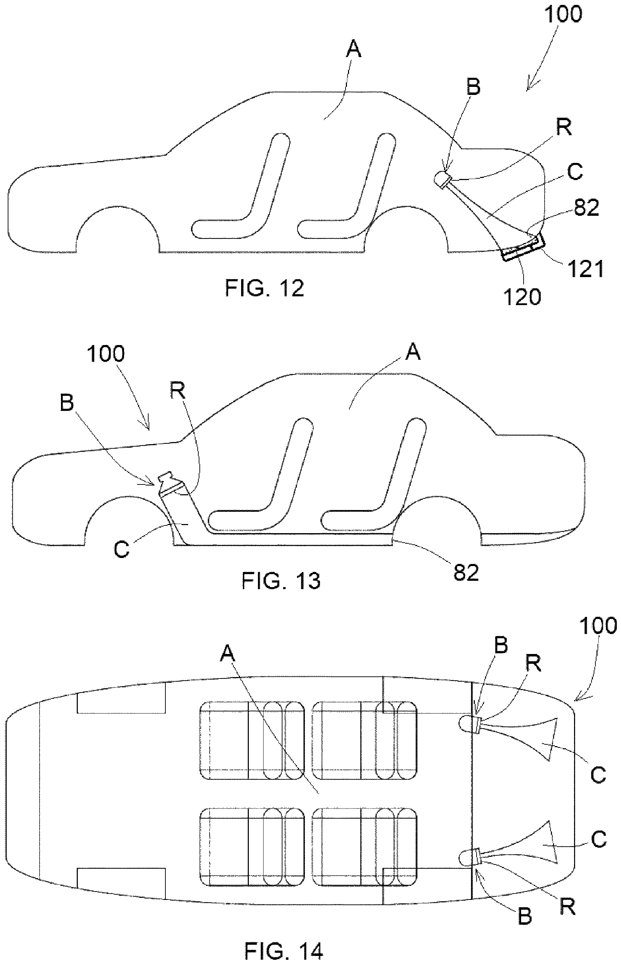

Fig. 12, which is not part of the invention, illustrates the installation of an electro-acoustic transducer (B) in the vehicle (A), in the form of a compression driver that can be integrated in the trunk in the back of the vehicle, in such a way to emit the sound from the back of the vehicle. The electro-acoustic transducer (B) is associated with an acoustic wave-guide (C) that passes through the body of the vehicle and has an outlet (82) that ends in the back of the body of the vehicle and is covered with a grille (120) installed in a rear bumper (121) of the vehicle.

Fig. 13, which is not part of the invention, illustrates the installation of an electro-acoustic transducer (B) in the vehicle (A), in the form of a loudspeaker that is disposed in the front hood of the vehicle. In such a case, the electro-acoustic transducer (B) is associated with an acoustic wave-guide (C) that follows the bottom of the body of the vehicle, keeping the curvature with the minimum effect on the air flow (lower aerodynamic resistance). The acoustic wave-guide (C) passes through the body of the vehicle and has an outlet (82) disposed on the outside of the vehicle and directed, for instance, towards the rear wheels of the vehicle.

Fig. 14, which is not part of the invention, illustrates two electro-acoustic transducers (B) disposed in the trunk of the vehicle and coupled with two wave-guides (C) that come out from the bottom of the vehicle body, such as two silencers, simulating the form and the sound of the silencer(s) of the vehicle.

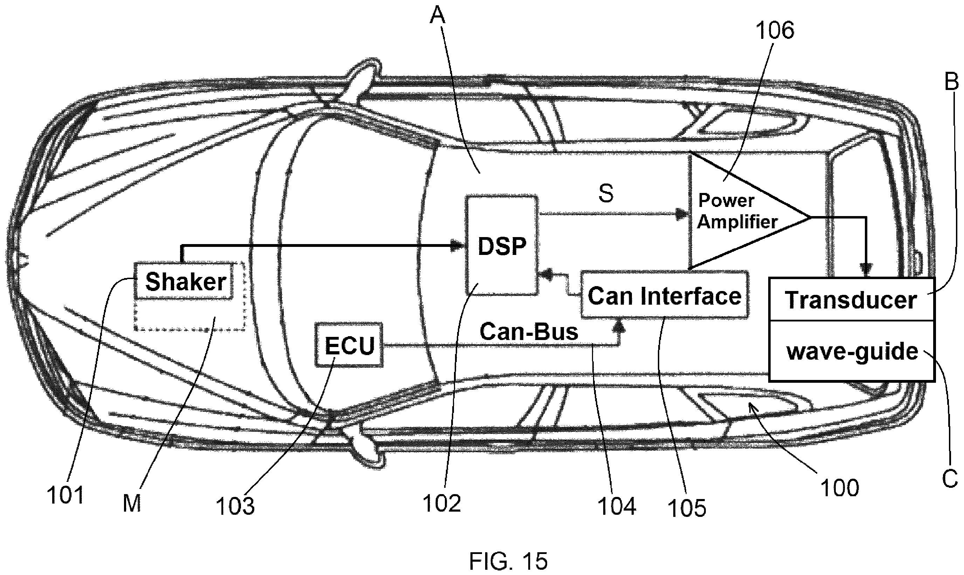

Fig. 15, which is not part of the invention, illustrates a signal processing system that can be used in the sound generating system (100; 200) of the invention. Such a signal processing system can be substantially similar to the one described in detail in the patent No. US9686611 in the name of the same applicant ASK INDUSTRIES SOCIETÀ PER AZIONI.

The vehicle (A) has an internal combustion engine (M) whereon a vibration sensor (101), such as an inertial vibration loudspeaker (shaker or exciter), is mounted (101). The shaker (101) is electrically connected to a digital signal processor (DSP) (102) to provide information on the vibrations of the engine (M).

An electronic control unit (ECU) (103) of the vehicle is connected to the DSP (102) by means of a Can-bus (104) and a Can interface (105) to provide information on parameters of the vehicle, such as number of engine revolutions, engine torque, driving position, and the like. Evidently, the DSP (102) can be connected to the electronic control unit (ECU) (103) and/or to sensors disposed in the vehicle to detect parameters indicative of a sound emitted by the exhaust of an internal combustion engine.

According to the information received from the shaker (101) and from the ECU (103), the DSP (102) processes a signal (S) suitable for controlling the transducer (B) to generate a sound that reproduces and increases the sound emitted by the exhaust gases of the engine.

Evidently, a power amplifier (106) amplifies the signal (S) emitted by the DSP (102) in such a way to provide an amplified signal to the transducer (B). The wave-guide (C) coupled with the transducer (B) passes through the vehicle body to emit the sound generated by the transducer outwards.

In case of an electric car, which is not provided with an internal combustion engine, the shaker (101) can be omitted and the sound can be artificially generated by means of the DSP (102).

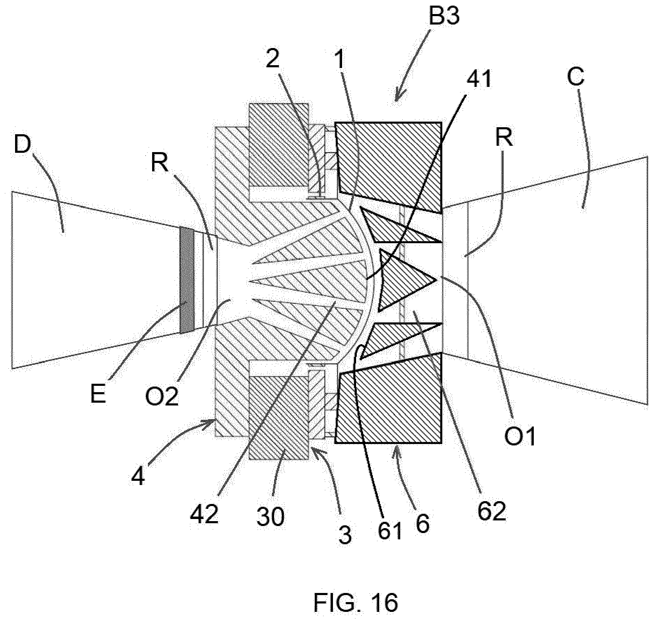

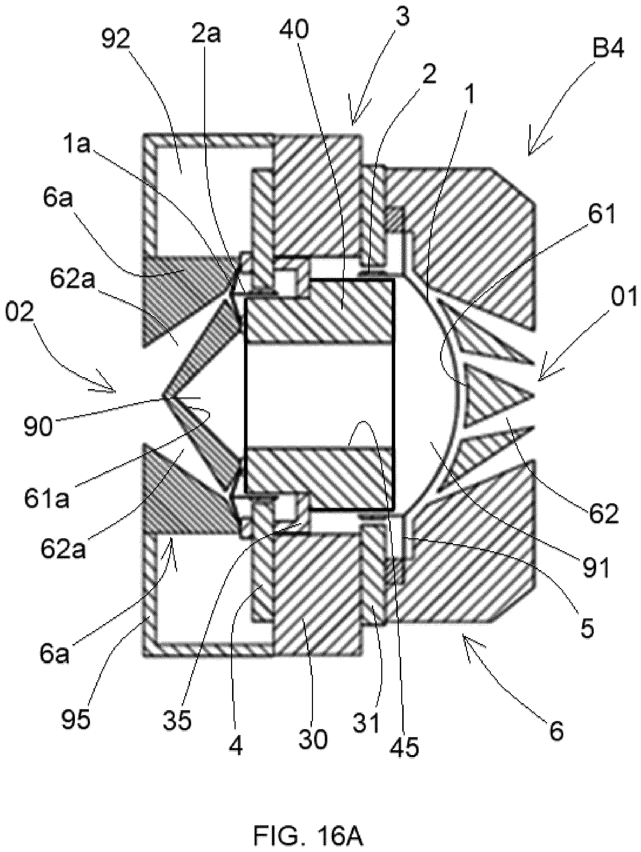

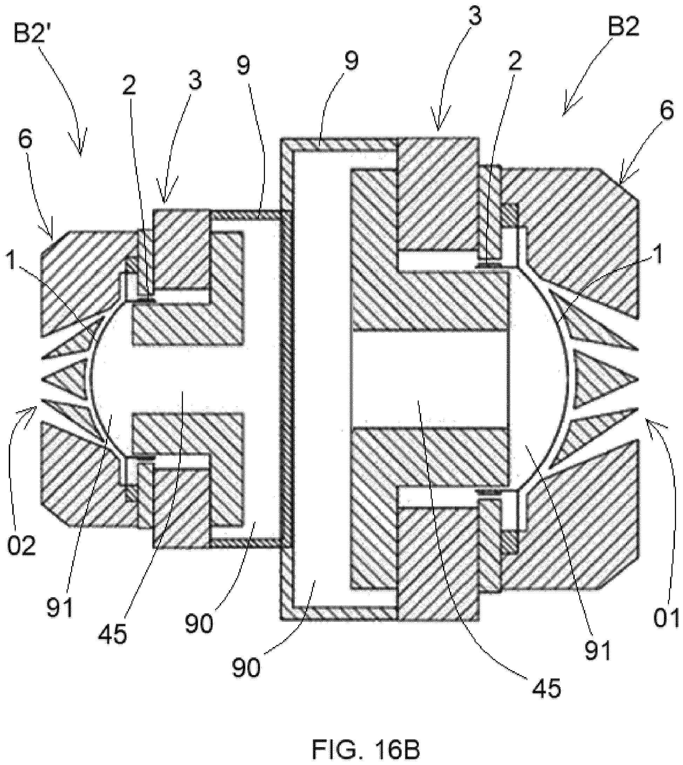

Fig. 16 illustrates a third embodiment of a compression driver (B3) that comprises a first output duct (O1) and a second output duct (02), which are respectively disposed in front of and behind the membrane (1).

The compression driver (B3) comprises:
- a support (6) identical to the one illustrated in Fig. 4, wherein the first output duct (O1) is obtained; and
- a yoke (4) identical to the one illustrated in Fig. 3, wherein the second output duct (02) is obtained.

Phase-plugs (R) are disposed in the first output duct (O1) and in the second output duct (02). A first wave-guide (C) and a second wave-guide (D) are respectively mounted on the support (6) and on the yoke (4) in such a way to be coupled with the phase-plugs (R). An acoustic damper (E) is disposed in the second wave-guide (D), in the form of a plate made of sound-absorbing material with a thickness of 1-4 cm.

Fig. 16A illustrates a fourth embodiment of a compression driver (B4) that comprises a first output duct (O1) and a second output duct (02).

The magnetic unit (3) comprises an annular magnet (30) disposed between a yoke (4) and an upper pole plate (31), both of them having an annular shape,

A shank (40) is axially disposed in the yoke, the magnet and the upper pole plate, in such a way to define a first air gap between shank (40) and upper pole plate (31), wherein a first voice coil (2) is disposed, and a second air gap between shank (40) and yoke (4), wherein a second voice coil (2a) is disposed. The shank (40) is fixed to the yoke by means of an L-shaped element (35) made of non-ferromagnetic material.

A first dome-shaped membrane (1) is fixed to the first voice coil (2). In this way, a front chamber (91) is formed between the shank (40) and the first membrane (1).

A first support (6) is disposed in front of the first membrane (1). The first support (6) has passages (62) that end in the first output duct (O1) suitable for being used to introduce the sound outside the vehicle compartment, using the first dome-shaped membrane (1).

A second membrane (1a) with annular shape and V-shaped section is fixed to the second voice coil (2a).

A second support (6a) is disposed in front of the second membrane (1). The second support (6a) has passages (62a) that end in the second output duct (02) suitable for being used to introduce sound inside the vehicle compartment, using the second annular membrane (1a).

The second support (6a) has an axial seat (61a) with tapered shape that forms a rear chamber (90) between the shank (40) and the second support. The shank (40) has an axial duct (45) that puts the front chamber (91) in communication with the rear chamber (90).

A casing (95) connects the second support (6a) to the magnetic unit in such a way to define a peripheral annular chamber (92) around the second support (6a).

Fig. 16B illustrates an embodiment with two compression drivers (B2, B2') that are similar to Fig. 4A and are disposed in back to back configuration, in such a way that the first compression driver (B2) emits the sound in a first output duct (O1), and the second compression driver (B2') emits the sound in a second output duct (02) disposed at 180° with respect to the first output duct (O1).

In this case, instead of being shaped like a dome, the enclosure (9) has a parallelepiped shape for easier mounting.

If the first output duct (O1) emits the sound outside the vehicle compartment, the first compression driver (B2) can be larger than the second compression driver (B2').

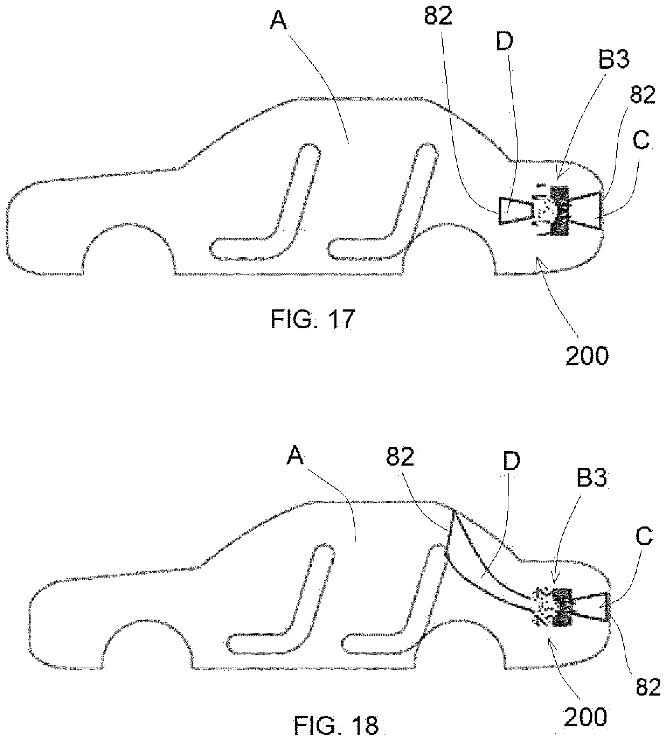

With reference to Figs. 17 and 18, a second embodiment of the sound generating system (200) is illustrated, wherein the first wave-guide (C) directed towards the convex side of the membrane (1) is used to convey the sound reproduced by the compression driver (B3; B4; B2, B2') outside of the vehicle. The second wave-guide (D) is used to convey the sound inside the vehicle compartment. The two sounds reproduced by the two wave-guides (C, D) are push-pull, but insist in two space portions that are separated without interaction.

It must be noted that the first wave-guide (C) that emits the sound outside is associated with the convex part of the membrane (1) of the compression driver (B3;B4; B2), in such a way that the coil voice (2) is protected against weather agents.

In Fig. 17, the outlet (82) of the second wave-guide (D) is disposed behind the rear seats of the vehicle.

In Fig. 18, the outlet (82) of the second wave-guide (D) is disposed above the rear seats of the vehicle.

## Claims

1. Sound generating system (200) for a vehicle (A) comprising:
- an electro-acoustic transducer (B) suitable for generating a sound in response to an electrical input signal,
- a digital signal processor (DSP) (102) electrically connected to the electro-acoustic transducer (B) to control the electro-acoustic transducer (B) in such a way to emit a sound; said (DSP) (102) being configured in such a way that said electro-acoustic transducer (B) emits a sound that is similar to the sound generated by the exhaust emissions of an internal combustion engine; and
- an acoustic wave-guide or horn (C) coupled with the electro-acoustic transducer (B) to convey and concentrate the sound emitted by the electro-acoustic transducer,
wherein the electro-acoustic transducer (B) is disposed in the vehicle (A) and a portion of the acoustic wave-guide (C) lies inside the vehicle (A) and another portion of the acoustic wave-guide lies outside the vehicle, where the sound is emitted;
said electro-acoustic transducer (B) comprises a sound emission membrane (1), and
said sound generating system (200) comprises a first acoustic wave-guide (C) coupled with said electro-acoustic transducer (B) in front of said membrane, and a second acoustic wave-guide (D) coupled with said electro-acoustic transducer (B) behind said membrane,
wherein said first acoustic wave-guide (C) has an outlet (82) outside the vehicle to emit the sound outside the vehicle, and said second acoustic wave-guide (D) has an outlet (82) inside the vehicle to emit the sound inside the vehicle.

2. The sound generating system (200) of claim 1, wherein said membrane (1) has a dome-like shape or a tapered shape in such a way to define a concave side and a convex side; said first acoustic wave-guide (C) is directed towards said convex side of the membrane; and said second acoustic wave-guide (D) is directed towards said concave side of the membrane.

3. The sound generating system (200) of claim 2, wherein said electro-acoustic transducer (B) is a compression driver (B3; B4; B2, B2') comprising:
- a voice coil (2) connected to said membrane (1) and disposed in an air gap with a magnetic field generated by a magnetic unit (3),
- a spider (5) connected to the magnetic unit (3) and to the voice coil (2) to center the voice coil (2) in the air gap,
- a support (6) disposed on the magnetic unit; the support (6) having a concave surface (61) directed towards the convex surface of the membrane (1), the concave surface (61) of the support being provided with a plurality of openings in communication with passages (62) that end into a first output duct (O1) for the emission of sound; and
- a yoke (40) and a shank (40) disposed inside the voice coil (2).

4. The sound generating system (200) of claim 3, wherein said shank (40) of the compression driver (B3) has a convex surface (41) directed towards the concave surface of the membrane (1), the convex surface (41) of the shank being provided with a plurality of openings in communication with passages (42) that end into a second output duct (02) for the emission of sound.

5. The sound generating system (200) of claim 3, wherein said shank (40) of the compression driver (B4; B2) comprises an axial duct (45) communicating with a front chamber (91) arranged between the shank (40) and the membrane (1) and a rear chamber (90) arranged between the shank and a second support (6a) or enclosure (9).

6. The sound generating system (200) of claim 5, wherein said compression driver (B4) comprises:
- a second voice coil (2a) arranged in a second air gap between the shank (40) and the yoke (4),
- a second membrane (1a) having an annular shape, connected to the second voice coil (2a), and
- the second support (6a) faced towards the second membrane (1a) and provided with passages (62) communicating with a second output duct (02) for the emission of sound.

7. The sound generating system (200) of claim 3, comprising two compression drivers (B2, B2') arranged in a back to back arrangement, so that the first compression driver emits the sound in a first output duct (O1) and the second output duct (02) arranged at 180° with respect to the first output duct (O1).

8. The sound generating system (200) of any one of the preceding claims, comprising a first and a second phase-plug (R), respectively disposed between the electro-acoustic transducer (B) and the first wave-guide (C), and between the electro-acoustic transducer (B) and the second wave-guide (D).

9. The sound generating system (200) of any one of the preceding claims, also comprising an acoustic damper (E) disposed in the second wave-guide (D).

10. The sound generating system (200) of any one of the preceding claims, wherein said first acoustic wave-guide (C) has an inlet groove (8) and a body (81) that defines a tapered conduit (83) with increasing dimensions from the inlet groove (8) to an outlet (82); wherein said first acoustic wave-guide (C) generates an "S"-shaped tortuous path or a curved path from said inlet groove (8) to said outlet (82).

11. The sound generating system (200) of any one of the preceding claims, wherein said DSP (101) is connected to an electronic control unit (ECU) (103) of the vehicle and/or to sensors (101) disposed in the vehicle to detect vehicle parameters indicative of a sound generated by the exhaust emissions of an internal combustion engine.

## Patentansprüche

1. Klangerzeugungssystem (200) für ein Fahrzeug (A), umfassend:
- einen elektroakustischen Wandler (B), der geeignet ist, einen Klang als Reaktion auf ein elektrisches Eingangssignal zu erzeugen,
- einen digitalen Signalprozessor (DSP) (102), der elektrisch mit dem elektroakustischen Wandler (B) verbunden ist, um den elektroakustischen Wandler (B) so zu steuern, dass dieser einen Klang abgibt; wobei der (DSP) (102) so konfiguriert ist, dass der elektroakustische Wandler (B) einen Klang abgibt, der dem von den Abgasen eines Verbrennungsmotors erzeugten Klang ähnlich ist; und
- einen akustischen Wellenleiter oder ein Horn (C), der/das mit dem elektroakustischen Wandler (B) gekoppelt ist, um den von dem elektroakustischen Wandler abgegebenen Klang zu leiten und zu konzentrieren,
wobei der elektroakustische Wandler (B) in dem Fahrzeug (A) angeordnet ist und ein Teil des akustischen Wellenleiters (C) innerhalb des Fahrzeugs (A) liegt und ein anderer Teil des akustischen Wellenleiters außerhalb des Fahrzeugs liegt, wo der Klang abgegeben wird;
wobei der elektroakustische Wandler (B) eine Klangerzeugungsmembran (1) umfasst und
das Klangerzeugungssystem (200) einen ersten akustischen Wellenleiter (C) umfasst, der mit dem elektroakustischen Wandler (B) vor der Membran gekoppelt ist und einen zweiten akustischen Wellenleiter (D), der mit dem elektroakustischen Wandler (B) hinter der Membran gekoppelt ist,
der erste akustische Wellenleiter (C) eine Auslassmündung (82) außerhalb des Fahrzeugs aufweist, um den Klang außerhalb des Fahrzeugs abzugeben, und der zweite akustische Wellenleiter (D) eine Auslassmündung (82) innerhalb des Fahrzeugs aufweist, um den Klang innerhalb des Fahrzeugs abzugeben.

2. Klangerzeugungssystem (200) nach Anspruch 1, wobei die Membran (1) kuppelartige oder konische Form aufweist, so dass eine konkave Seite und eine konvexe Seite definiert wird; der erste akustische Wellenleiter (C) der konvexen Seite der Membran zugewandt ist; und der zweite akustische Wellenleiter (D) der konkaven Seite der Membran zugewandt ist.

3. Klangerzeugungssystem (200) nach Anspruch 2, wobei der elektroakustische Wandler (B) ein Kompressionstreiber (B3; B4; B2, B2') ist, der Folgendes umfasst:
- eine Schwingspule (2), die mit der Membran (1) gekoppelt ist und in einem Luftspalt mit einem Magnetfeld angeordnet ist, das von einer Magneteinheit (3) erzeugt wird,
- eine Zentriervorrichtung (5), die mit der Magneteinheit (3) und der Schwingspule (2) verbunden ist, um die Schwingspule (2) in dem Luftspalt zu zentrieren,
- einen Träger (6), der auf der Magneteinheit angeordnet ist; wobei der Träger (6) eine konkave Oberfläche (61) aufweist, die der konvexen Oberfläche der Membran (1) zugewandt ist; wobei in der konkaven Oberfläche (61) des Trägers eine Vielzahl von Öffnungen vorhanden ist, die mit Durchgängen (62) in Verbindung stehen, die zu einer ersten Ausgangsleitung (O1) zur Klangabgabe führen; und
- eine untere Polplatte (4) und einen Schaft (40), der in der Schwingspule (2) angeordnet ist.

4. Klangerzeugungssystem (200) nach Anspruch 3, wobei der Schaft (40) des Kompressionstreibers (B3) eine konvexe Oberfläche (41) aufweist, die der konkaven Oberfläche der Membran (1) zugewandt ist; wobei auf der konvexen Oberfläche (41) des Schafts eine Vielzahl von Öffnungen vorhanden ist, die mit Durchgängen (42) in Verbindung stehen, die zu einer zweiten Ausgangsleitung (02) zur Klangabgabe führen.

5. Klangerzeugungssystem (200) nach Anspruch 3, wobei der Schaft (40) des Kompressionstreibers (B4, B2) eine axiale Leitung (45) umfasst, die eine zwischen dem Schaft (40) und der Membran (1) angeordnete vordere Kammer (91) und eine zwischen dem Schaft (40) und einem zweiten Träger (6a) oder Gehäuse (9) angeordnete hintere Kammer (90) in Verbindung bringt.

6. Klangerzeugungssystem (200) nach Anspruch 5, wobei der Kompressionstreiber (B4) Folgendes umfasst:
- eine zweite Schwingspule (2a), die in einem zweiten Luftspalt zwischen dem Schaft (40) und der unteren Polplatte (4) angeordnet ist,
- eine zweite Membran (1a) mit Ringform, die mit der zweiten Schwingspule (2a) verbunden ist, und
- einen zweiten Träger (6a), der der zweiten Membran (1a) zugewandt ist und mit Durchgängen (62) versehen ist, die zu einer zweiten Ausgangsleitung (02) für die Klangabgabe führen.

7. Klangerzeugungssystem (200) nach Anspruch 3, umfassend zwei Kompressionstreiber (B2, B2'), die in einer O-Anordnung so angeordnet sind, dass der erste Kompressionstreiber den Klang in einer ersten Ausgangsleitung (O1) abgibt und die zweite Ausgangsleitung (02) im Winkel von 180° in Bezug auf die erste Ausgangsleitung (O1) angeordnet ist.

8. Klangerzeugungssystem (200) nach einem der vorstehenden Ansprüche, umfassend einen ersten und einen zweiten Phasenstecker (R), die zwischen dem elektroakustischen Wandler (B) und dem ersten Wellenleiter (C) bzw. zwischen dem elektroakustischen Wandler (B) und dem zweiten Wellenleiter (D) angeordnet sind.

9. Klangerzeugungssystem (200) nach einem der vorstehenden Ansprüche, ferner umfassend einen Schalldämpfer (E), der in dem zweiten Wellenleiter (D) angeordnet ist.

10. Klangerzeugungssystem (200) nach einem der vorstehenden Ansprüche, wobei der erste akustische Wellenleiter (C) eine Einlassnut (8) und einen Körper (81) aufweist, der eine konische Leitung (83) definiert, deren Abmessungen von der Einlassnut (8) zu einer Auslassmündung (82) hin zunehmen; wobei der erste akustische Wellenleiter (C) einen S-förmig gewundenen Weg oder einen gebogenen Weg von der Einlassnut (8) zu der Auslassmündung (82) erzeugt.

11. Klangerzeugungssystem (200) nach einem der vorstehenden Ansprüche, wobei der DSP (101) mit einer elektronischen Steuereinheit (ECU) (103) des Fahrzeugs und/oder mit Sensoren (101) verbunden ist, die in dem Fahrzeug angeordnet sind, um Parameter des Fahrzeugs zu erfassen, die auf einen Klang hinweisen, der von den Abgasen eines Verbrennungsmotors erzeugt wird.

## Revendications

1. Système de génération de sons (200) pour un véhicule (A) comprenant :
- un transducteur électro-acoustique (B) apte à générer un son en réponse à un signal électrique d'entrée,
- un processeur de signal numérique (DSP) (102) branché électriquement au transducteur électro-acoustique (B) pour commander le transducteur électro-acoustique (B) afin qu'il émette un son ; ledit (DSP) (102) étant configuré de manière que ledit transducteur électro-acoustique (B) émette un son similaire au son généré par les gaz d'échappement d'un moteur à combustion interne ; et
- un guide à ondes acoustique ou avertisseur (C), couplé au transducteur électro-acoustique (B), pour transmettre et concentrer le son émis par le transducteur électro-acoustique,
où le transducteur électro-acoustique (B) est disposé dans le véhicule (A) et une partie du guide à ondes acoustique (C) est placée à l'intérieur du véhicule (A) et une autre partie du guide à ondes acoustique est placée à l'extérieur du véhicule, là où le son est émis ;
ledit transducteur électro-acoustique (B) comprend une membrane (1) d'émission du son, et
ledit système de génération de sons (200) comprend un premier guide à ondes acoustique (C) couplé à au susdit transducteur électro-acoustique (B) devant ladite membrane et un second guide à ondes acoustique (D) couplé au susdit transducteur électro-acoustique (B) derrière ladite membrane,
où ledit premier guide à ondes acoustique (C) a une baie de sortie (82) à l'extérieur du véhicule pour émettre le son à l'extérieur du véhicule et ledit second guide à ondes acoustique (D) a une baie de sortie (82) à l'intérieur du véhicule pour émettre le son à l'intérieur du véhicule.

2. Système de génération de sons (200) selon la revendication 1, où ladite membrane (1) a une forme en coupole ou conique afin de définir une face concave et une face convexe ; ledit premier guide à ondes acoustique (C) est orienté vers ladite face convexe de la membrane ; et ledit second guide à ondes acoustique (D) est orienté vers ladite face concave de la membrane.

3. Système de génération de sons (200) selon la revendication 2, où ledit transducteur électro-acoustique (B) comprend un driver de compression (B3; B4; B2, B2') comprenant :
- une bobine acoustique (2), reliée à ladite membrane (1), est disposée dans un entrefer où il y a un champ magnétique généré par un groupe magnétique (3),
- un croisillon (5) relié au groupe magnétique (3) et à la bobine acoustique (2) pour centrer la bobine acoustique (2) dans l'entrefer,
- un support (6) disposé sur le groupe magnétique ; le support (6) ayant une surface concave (61) orientée vers la surface convexe de la membrane (1) ; une pluralité d'ouvertures communicantes avec des passages (62) qui portent à un premier conduit de sortie (O1) pour l'émission du son étant prévues sur la surface concave (61) du support ; et
- un empiècement (4) et une tige (40) disposée dans la bobine acoustique (2).

4. Système de génération de sons (200) selon la revendication 3, où ladite tige (40) du driver de compression (B3) a une surface convexe (41) orientée vers la surface concave de la membrane (1); une pluralité d'ouvertures communicantes avec des passages (42) qui portent à un second conduit de sortie (02) pour l'émission du son étant prévues sur la surface convexe (41) de la tige.

5. Système de génération de sons (200) selon la revendication 3, où ladite tige (40) du driver de compression (B4; B2) comprend un conduit axial (45) qui met en communication une chambre antérieure (91) disposée entre la tige (40) et la membrane (1) et une chambre postérieure (90) disposée entre la tige (40) et un second support (6a) ou coque (9).

6. Système de génération de sons (200) selon la revendication 5, où ledit driver de compression (B4) comprend :
- une seconde bobine acoustique (2a) disposée dans un second entrefer entre la tige (40) et l'empiècement (4),
- une seconde membrane (1a), de forme annulaire, reliée à la seconde bobine acoustique (2a), et
- le second support (6a) orienté vers la seconde membrane (1a) est muni de passages (62) qui portent à un second conduit de sortie (02) pour l'émission du son.

7. Système de génération de sons (200) selon la revendication 3, comprenant deux drivers de compression (B2, B2') disposés en configuration dos à dos de manière que le premier driver de compression (B2) émette le son dans un premier conduit de sortie (O1) et le second conduit de sortie (02) disposé à 180° par rapport au premier conduit de sortie (O1).

8. Système de génération de sons (200) selon l'une quelconque des revendications précédentes, comprenant un premier et un second phaseplug (R) disposés respectivement entre le transducteur électro-acoustique (B) et le premier guide à ondes (C) et entre le transducteur électro-acoustique (B) et le second guide à ondes (D).

9. Système de génération de sons (200) selon l'une quelconque des revendications précédentes, comprenant également un atténuateur de pression acoustique (acoustic damper) (E) disposé dans le second guide à ondes (D).

10. Système de génération de sons (200) selon l'une quelconque des revendications précédentes, où le premier guide à ondes acoustique (C) a une gorge d'entrée (8) et un corps (81) qui définit un conduit conique (83) ayant des dimensions croissantes à partir de la gorge d'entrée (8) jusqu'à une baie de sortie (82) ; où ledit premier guide à ondes acoustique (C) génère un parcours tortueux en « S » ou un parcours courbe depuis ladite gorge d'entrée (8) jusqu'à ladite baie de sortie (82).

11. Système de génération de sons (200) selon l'une quelconque des revendications précédentes, où ledit DSP (101) est branché à une unité de commande électronique (ECU) (103) du véhicule et/ou à des capteurs (101) disposés dans le véhicule pour relever des paramètres du véhicule indicatifs d'un son généré par les gaz d'échappement d'un moteur à combustion interne.
